# EUROPÄISCHE PATENTSCHRIFT

(11) **EP 2 906 829 B1**
(45) Veröffentlichungstag und Bekanntmachung des Hinweises auf die Patenterteilung: **26.08.2020**
(21) Anmeldenummer: 13763062.0
(22) Anmeldetag: 17.09.2013
(51) Int. Cl.: F04D 29/16, F16J 15/16

(54) **SPALTRING MIT SELBSTREGULIERENDEM DROSSELSPALT**
SPLIT RING HAVING A SELF-REGULATING THROTTLE GAP
BAGUE À FENTE MUNIE D'UNE FENTE D'ÉTRANGLEMENT À RÉGLAGE AUTOMATIQUE

(30) Priorität: 12.10.2012 DE 102012218606
(43) Veröffentlichungstag der Anmeldung: 19.08.2015
(73) Patentinhaber: KSB SE & Co. KGaA, 67227 Frankenthal (DE)
(72) Erfinder: LENK, Jan Hendrik, 67227 Frankenthal (DE)
(86) Internationale Anmeldenummer: PCT/EP2013/069243
(87) Internationale Veröffentlichungsnummer: WO 2014/056682

(56) Entgegenhaltungen:
- EP-A1- 2 466 149
- DE-B1- 1 628 311
- US-A- 2 021 346
- US-A- 2 162 486
- US-A- 3 183 841

## Beschreibung

Die Erfindung betrifft einen Spaltring für einen hydrodynamischen Drosselspalt einer Strömungsmaschine für flüssige Fördermedien, insbesondere für den Drosselspalt am Laufrad einer Kreiselpumpe.

Drosselspalte als Spaltring ausgeführt, beispielsweise für Kreiselpumpen, sind in verschiedenen Ausführungen bekannt. Sie dichten den Spalt zwischen einem sich drehenden Rotorteil, beispielsweise einem Kreiselpumpenlaufrad und einem feststehenden Stator, beispielsweise einem Gehäuse ab. Aufgrund der notwendigen Toleranzen bei der Herstellung der einzelnen Komponenten gibt es eine Mindestspaltweite, die gerade verhindert, dass Teile sich berühren und somit Reibung und Verschleiß entsteht.
Zur Reduzierung der Verluste am genannten Spalt gibt es unterschiedliche Ausführungen einer Spaltdichtung, die jedoch nach Art des Fördermediums mehr oder weniger starkem Verschleiß unterworfen sind. Hierbei ist in axiale und radiale Ausführungen des Drosselspaltes zu unterscheiden. Bei axial verschiebbaren Bauteilen kann nur mit erheblichem Verschleiß ein entsprechender axialer Dichtspalt realisiert werden.

Die US 1037243 A zeigt eine Spaltabdichtung, die sich aus Elementen zusammensetzt, die teilweise mit dem Gehäuse und teilweise mit dem drehenden Teil verbunden sind. Dieser Aufbau als Labyrinth setzt eine minimale axiale Verschiebung des Rotors als Bedingung voraus, zeigt des Weiteren einen hohen Verschleiß und ist sehr aufwändig bei der Montage und der axialen Einstellung des Rotors. Bei einer geforderten axialen Verschiebbarkeit des Rotors wird ein radialer Dichtspalt verwendet, der einen niedrigen Verschleiß, eine hohe Betriebssicherheit und eine einfache Montage, jedoch einen hohen Verlustbeiwert beziehungsweise einen niedrigeren hydraulischen Wirkungsgrad beinhaltet. Hierbei steht der hydraulische Wirkungsgrad durch den Drosselspalt in reziproker Relation zum Verschleiß und Betriebssicherheit, je höher der Wirkungsgrad, desto höher der Verschleiß und desto niedriger die Betriebssicherheit.

Die EP 0905381 A1 zeigt eine Ausführung eines Spaltrings in einer Strömungs-maschine, bei der sowohl ein hoher hydraulischer Wirkungsgrad als auch eine hohe Betriebssicherheit durch niedrigen Verschleiß gewährleistet ist. Bei der EP 0905381 A1 handelt es um den statischen Teil einer hydrodynamischen Drossel mit selbstregulierenden temperaturabhängigen Dämpfungseigenschaften im Drosselspalt. Der Drosselspalt ist als radialer Spaltring ausgeführt und besitzt eine Verschiebbarkeit in radialer Richtung im Spalt. Diese Ausführung ist für jede andere Strömungsmaschine mit flüssigen Fördermedien anwendbar

Die US 1037243 A zeigt eine Spaltabdichtung, die sich aus einem oder mehreren Elementen zusammensetzen kann, die einen Teil des Stators bilden.

Die EP 2 466 149 A1 zeigt eine Strömungsmaschine für ein Fluid mit einem radialen Dichtspalt und einem stationären Verschleißring.

Die DE 1 628 311 zeigt eine Luftleitvorrichtung eines Radialventilators für pneumatische Förderanlagen mit einem flexiblen Dichtungsring.

Die US 3,183,841 A zeigt eine flexible Anordnung einer Spaltdichtung bei einer Pumpe.

Die US 2,021,346 A und die US 2,162,486 A zeigen jeweils Kreiselpumpen mit einem Spalt, der mittels eines speziell ausgestalteten Dichtungsrings abgedichtet ist.

Die Aufgabe der Erfindung besteht darin, ein Dichtungselement zu schaffen, das den Spalt zwischen dem Rotor und dem Stator einer Kreiselpumpe minimiert und selbstständig dynamisch auf ein Minimum reguliert, wobei der Verschleiß minimiert und eine hohe Betriebssicherheit gewährleistet wird.

Die Aufgabe wird durch die Merkmale des Anspruchs 1 gelöst, und zwar dadurch, dass an der den Spalt radial begrenzenden Fläche des Stators, z.B. dem Gehäuse durch den vorliegenden Spaltring ein, mit Medium gefüllter, radialer Ringraum ausgebildet bzw. umschlossen wird. Dieser radiale Ringraum wirkt als Puffer und ist so ausgerichtet, dass er radial in Richtung des drehenden Bauteiles zentriert ist.

Die Umschließung des Bauraumes wird durch den u-förmig ausgebildeten Spaltring realisiert, der u-förmige Spaltring wird über eine Passung der Innenseite der Schenkel des U im Stator geführt wobei diese Passung durch eine spezielle Werkstoffauswahl der Schenkel temperaturabhängig eingestellt wird und bei Betriebstemperatur der kleinste Abstand bzw. das engste Passungsspiel realisiert wird. Somit wird dieser axiale Spalt vom statischen Spaltring zum Stator sehr klein gehalten.

Der u-förmig ausgeführte Spaltring bildet zusammen mit dem Mediumpuffer eine labyrinthartige Dichtung aus. Die Lage des Spaltrings wird durch das sich drehende Bauteil beeinflusst. Da der Spaltring schwimmend gelagert ist, kann er sich bei einer leicht exzentrischen Lage aufgrund unterschiedlicher Druckverhältnisse automatisch in eine Lage zentrieren, die einem ausgeglichenen Kräfteverhältnis entspricht. Der Spalt zwischen dem statischen Spaltring und dem drehenden Bauteil wird minimiert, wobei die Drossel stets berührungsfrei bleibt.

Die Funktionsweise des Spaltrings beruht auf der Wirkungsweise von zwei dynamisch arbeiteten Bereichen. Der erste Bereich ist die klassische Drosselstrecke eines radialen Spaltes, hierbei wird durch die hydraulischen Effekte im rotatorischen Spalt eine Stabilisierung durch die zentrierende Radialkraft abhängig von der Spaltweite erzeugt.

Der zweite Bereich ist mit ruhendem Medium im Puffer gefüllt, der von der Spaltring-geometrie statisch abgedichtet ist. Das dort enthaltene Medium kann durch die Drosselstrecke zwischen den Schenkeln des u-förmigen Spaltrings und dem Gehäuse lokal hindurchfließen, wenn der Spaltring durch eine Exzentrizität des Rotors bzw. eine Auslenkung, wie im oberen Abschnitt beschrieben, ausgelenkt wird. Bei der lokalen Verdrängung des Mediums im Puffer wird automatisch das Medium wieder aus dem umliegenden Strömungsraum nachgefördert, womit der Puffer immer das gleiche Volumen beinhaltet. Somit verfügt der mit Medium gefüllte Ringraumpuffer eine Dämpfungseigenschaft, da auf das Medium ein spezifischer Druck wirken muss, um durch die axialen Spalte der Spaltschenkel verdrängt zu werden. Dieser Druck und somit die Dämpfungseigenschaften werden durch die Passung und Werkstoffauswahl des beschriebenen Spaltringes entsprechend der betrieblichen Anforderungen eingestellt. Ein weiterer Vorteil dieser Ausgestaltung ist der Schmiereffekt des fließenden Mediums in der der Drosselstrecke an den Spaltschenkeln, dadurch wird die Reibung während des Zentriervorganges des Spaltringes während einer Auslegung auf einen Bruchteil des normalen Reibwertes von Metall auf Metall minimiert, ein Festfressen der Schenkel am Stator ist durch die Mediumsschmierung somit nahezu unmöglich und eine stetige betriebssichere Selbstzentrierung des Spaltringes zum Rotor gewährleistet.

Gemäß der Erfindung ist bei dem Dichtungselement vorgesehen, dass die Passung des axialen Drosselspaltes einstellbar ist. Wie bereits beschrieben, kann sich der Spaltring im radialen Spalt entsprechend der angreifenden Rückstellkräfte frei bewegen. Die Dämpfungseigenschaften werden durch die axiale beidseitige Drosselstrecke des Spaltringes am Stator eingestellt. Durch den Druckunterschied zwischen vor und nach dem Spaltring wird sich ein Durchfluss durch die axialen Spalte in Richtung des niedrigen Druckraum einstellen, dabei wird der Ringraum mit Medium und Druck beaufschlagt. Das im Spalt eingeschlossene Medium wirkt als hydrostatischer Puffer. Das Medium im Spalt wird bei Verschiebung des Rotors durch die Drosselspalte des Spaltringes in den Strömungsraum der Pumpe gedrückt. Je enger der Spalt, desto höher die erforderliche Kraft zum Überwinden des Drosselspaltes, desto höher der hydrostatische Dämpfungseffekt im Spalt. Das Einstellen des axialen Drosselspaltes reguliert den hydrostatischen Dämpfungseffekt.

In einer weiteren Ausgestaltung ist das Dichtungselement aus mindestens einem metallischen Werkstoff ausgeführt. Hier kann durch entsprechende geometrische Veränderung, wie beispielsweise Wanddickenunterschiede oder Spannungskerbe, die angestrebte konvexe Verformung des Spaltringes zur beschriebenen Drosselwirkung erzielt werden.

Alternativ ist der Spaltring als Bimetallspaltring ausgeführt, wobei die innere Lage, also die dem ortsfesten Gehäuse zugewandte Lage, einen wesentlich kleineren thermischen Ausdehnungskoeffizienten aufweist als die äußere Lage, die dem Strömungsraum zugewandt ist.

Beide Ausführungen realisieren eine wärmeabhängige Drosselwirkung und wärmeabhängige Rotordämpfung. Verformen sich die Seitenflanken des Spaltes bei Wärmeeintrag konvex nach Außen und verengen den Spalt zum Statorbauteil hin, so wird die hydrostatische Dämpfung des Rotors erhöht.

In einer weiteren Ausgestaltung besteht das Dichtungselement aus einem oder mehreren Elementen, die formschlüssig an die Stator-Geometrie verpresst oder verschraubt sind. Zur Möglichkeit der radialen Auslenkung ist ein entsprechender freier Ringraum außerhalb des Spaltringes vorgesehen, die radiale Erstreckung richtet sich nach der Größe der zu erwartenden Auslenkung des Rotors.

Bei einer weiteren Ausführungsform ist zusätzlich eine Verdrehsicherung vorgesehen, beispielsweise bestehend aus einem Langloch und einem Stift. Hierdurch wird zusätzlich eine ungewollte Relativbewegung zwischen dem Spaltring und dem ortsfesten Statorgehäuse ausgeschlossen. Die Beweglichkeit in konzentrischer Richtung bleibt dabei erhalten.

Anhand von Ausführungsbeispielen wird die Erfindung näher erläutert. Die Zeichnungen zeigen eine erfindungsgemäße Dichtungsanordnung. Im Einzelnen zeigt die
Fig. 1 eine erste Ausgestaltung einer erfindungsgemäßen Dichtungsanordnung und die
Fig. 2 eine zweite Ausgestaltung einer erfindungsgemäßen Dichtungsanordnung.

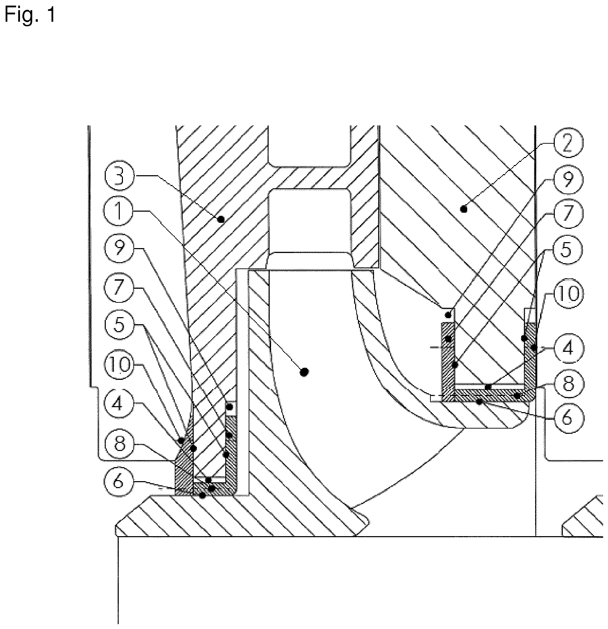

In der Fig. 1 ist eine erste Ausführungsform der erfindungsgemäßen Dichtungsanordnung eines Spaltringes detailliert dargestellt, wobei im Beispiel eine Kreiselpumpe zum Einsatz kommt. Gezeigt ist ein Kreiselpumpenlaufrad 1, das in dieser Anordnung das sich drehende Rotorbauteil ist, wobei es sich gegenüber einem Gehäuse 2 und einem Leitrad 3 dreht, die ortsfest als Stator zu betrachten sind.

Erfindungsgemäß soll der Spalt durch einen u-förmigen ein-oder mehrteiligen zylindrischen Spaltring 7 geschlossen werden. Der Spaltring ist über dem Drossel- beziehungsweise Spaltdurchmessers 6 des Kreiselpumpenlaufrades 1 im Stator bestehend aus dem Gehäuse 2 und dem Leitrad 3 angeordnet, wobei der Spaltring über die Schenkel 7 und 10, beziehungsweise 12 und 13 einer U-Form zur Führung entsprechend im Gehäuse eingepasst ist.

Der Spaltring 7 realisiert zwei radiale Funktionsspalte, den vorhandenen radialen Drossel- beziehungsweise Spaltdurchmessers 6 des Kreiselpumpenlaufrades als stetig durchströmten Spalt und den umschlossenen quasi-statischen Ring-Spaltraum 4 innerhalb der beschriebenen U-Spaltringausführung. In axialer Richtung liegt ein axialer Spalt 5 vor, der eine Beweglichkeit des Spaltrings 7 im Gehäuse 2 und / oder am Leitrad 3 ermöglicht.

Aufgrund eines Druckunterschieds wird durch die Spalte 4 und 5 fortlaufend eine geringe Menge des geförderten Mediums bewegt, wodurch eine ausreichende Schmierung der Flächen gegeben ist. Eine erste Variante des erfindungsgemäßen Spaltrings 7 wird in der Kreiselpumpe aus mehreren Teilen zusammengesetzt, wobei im Beispiel der Fig. 1 ein möglicherweise profilierter, flacher Ring mit einem L-förmig profilierten Ring durch eine Befestigung 8 verbunden wird. Diese Befestigung 8, kann beispielsweise durch ein oder mehrere zusätzliche Bauteile beispielsweise eine Verschraubung oder durch eine Schweißstelle, insbesondere durch ein Laserschweißverfahren hergestellt, gebildet werden. Aufgrund der vorhandenen Spalte ist der zusammengesetzte Spaltring in radialer Richtung beweglich, wobei die maximale Auslenkung durch das radiale Spiel 9 festgelegt ist.

Je nach Anwendungsgebiet kann es vorteilhaft sein, wenn sich der Spaltring 7 völlig frei bewegen kann. Insbesondere besteht so die Möglichkeit geschwindigkeits- und abstandsabhängige Reibungskräfte zu reduzieren. Für viele Anwendungen wird es jedoch vorteilhaft sein, wenn der Spaltring 7 in seiner Lage festgelegt ist. Hierfür kann in dem Spaltring ein radial ausgerichtetes Langloch vorgesehen sein in das ein Stift greift, der beispielsweise mit dem Gehäuse verbunden ist. Diese Verdrehsicherung 10 ist in der Fig. 1 nur schematisch dargestellt.

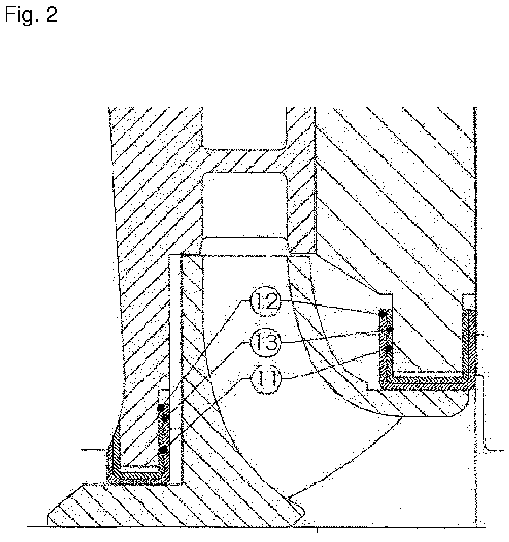

Die Fig. 2 zeigt eine weitere Ausgestaltung eines erfindungsgemäßen Spaltrings 7, wobei dieser aus einem in den Stator eingepressten, umlaufend geschlossenen Bimetallstreifen 11 hergestellt ist. Der Spaltring 7 ist, wie bereits im obigen Beispiel gezeigt fester Bestandteil des ortsfesten Bauteils.

Bei der Ausführung als Bimetallspaltring wird ein 2-lagiger Werkstoff verwendet, dessen innere Lage 11 einen wesentlich kleineren Ausdehnungskoeffizienten aufweist als die äußere Lage 12. Die Seitenflanken des Spaltes verformen sich bei Wärmeeintrag konvex nach Außen und verengen den Spalt 5 zum Statorbauteil, wodurch die hydrostatische Dämpfung des drehenden Bauteils erhöht wird. Die Bi-Metall-Ausführung realisiert eine wärmeabhängige Drosselwirkung und wärmeabhängige Rotordämpfung. Die wärmeabhängige Drosselwirkung und wärmeabhängige Rotordämpfung kann auch durch gezielten Einfluss auf die Geometrie eines Spaltringes aus Monostahl erreicht werden. Die mehrteilige und einteilige Ausführung kann jeweils in Monostahl und Bimetall ausgeführt werden.

Allgemein bedingt diese Anordnung, dass der Spaltring 7 im Einbauzustand zwischen dem Spiel 6 zum ortsfesten Gehäuse 2 und dem drehenden Bauteil 1 frei beweglich ist. Der Spaltring 7 liegt im Stillstand in einer Endlage auf dem drehenden Bauteil auf. Wenn der radiale Spalt 6 durch die Rotation des drehenden Bauteils 1 axial mit Medium durchströmt wird, zentriert sich der Spaltring 7 aufgrund des Lomakin-Effektes selbst zum drehenden Bauteil 1 und es stellt sich ein zentrisches Spiel zwischen Spaltring 7 und dem drehenden Bauteil 1 ein. Wenn das drehende Bauteil 1 durch instationäre oder stationäre Betriebszustände radial ausgelenkt wird, gibt der Spaltring 7 dynamisch in diesem Bereich nach, der Spalt 6 zwischen dem Laufrad 1 und dem Spaltring 7 wird dabei verkleinert, was eine Erhöhung der Spaltströmungsgeschwindigkeit in diesem Bereich zur Folge hat. Diese Geschwindigkeitserhöhung im Spalt 6 erzeugt entgegen gerichtet zur Auslenkungskraft eine Gegenkraft im Spalt 6, bis das Laufrad 1 wieder zentrisch zum Spaltring 7 durchströmt wird bzw. ein gleichmäßiges radiales Nennspiel zum drehenden Bauteil 1 erreicht ist.

Durch diese dynamische Selbstregulierung ist kein Anstreifen oder Festfressen des Rotors mit dem Stator in diesem Bereich möglich.

Die Dämpfungseigenschaften werden durch die axiale beidseitige Drosselstrecke 5 des Spaltringes 7 am Vorsprung eingestellt. Durch den Druckunterschied zwischen vor und nach dem Spaltring 7 wird sich ein Durchfluss durch die axialen Spalte 5 in Richtung des niedrigen Druckes einstellen, dabei wird der Spalt 4 mit Medium und Druck beaufschlagt. Das im Spalt 4 eingeschlossene Medium wirkt als hydrostatischer Puffer. Das Medium im Spalt 4 wird bei Verschiebung des Rotors durch die Drosselspalte 5 des Spaltringes 7 in den Strömungsraum der Pumpe gedrückt. Je enger der Spalt 5 ist, desto höher ist die erforderliche Kraft, die zum Überwinden des Drosselspaltes 5 benötigt wird und gleichzeitig entspricht dies einem höheren hydrostatischen Dämpfungseffekt im Spalt 4. Der hydrostatische Dämpfungseffekt wird durch die Passung des axialen Drosselspaltes 5 eingestellt.

Der Leckagestrom, der durch die Verdrängung des Mediums im radialen Spalt 5 bei einer Auslenkung des Laufrades 1 entsteht, minimiert die Reibung zwischen den, bei Laufradauslenkung, bewegten und den ortsfesten Bauteilen, insbesondere dem Gehäuse 2 und dem Leitrad 3. Durch den Drosselspalt 5 wird der Verschleiß der ortsfesten Bauteile an den vermeintlichen Berührstellen deutlich reduziert, was zusätzlich die Betriebssicherheit erhöht.

Alle Varianten dieses dynamischen, beweglichen Spaltringes 7 können mit entsprechenden Strömungsprofilen im Spalt 6 versehen werden, somit kann ein noch kleinerer Spalt und besser Wirkungsgrad der Kreiselpumpe erreicht werden.

### Bezugszeichenliste

1. Laufrad
2. Gehäuse
3. Leitrad
4. Spalt
5. Axialer Spalt
6. Radialer Spalt
7. Spaltring
8. Befestigung
9. Radiales Spiel
10.Verdrehsicherung
11.Bimetallblech
12.Innere Lage
13.Äußere Lage

## Patentansprüche

1. Dichtungselement (7) mit einem u-förmigen Spaltring (7) zur Abdichtung eines sich drehenden Bauteils (1) gegen ein ortsfestes Gehäuse (2), wobei zwischen dem sich drehenden Bauteil (1) und dem Gehäuse (2) ein hydrodynamischer Drosselspalt (6) einer Strömungsmaschine für flüssige Fördermedien besteht, in dem der u-förmige Spaltring (7) vorgesehen ist, wobei an einer den Drosselspalt (6) der Strömungsmaschine radial begrenzenden Fläche an dem ortsfesten Gehäuse (2, 3) ein umschlossener mit dem flüssigen Fördermedium gefüllter Ringraum (4) durch den u-förmigen Spaltring (7) ausgebildet ist, wobei der Ringraum (4) so ausgerichtet ist, dass er konzentrisch radial mit dem drehenden Bauteil (1) fluchtet, wobei der Ringraum (4) mittels des u-förmig ausgebildeten Spaltrings (7) umschlossen wird, wobei zwischen dem u-förmigen Spaltring (7) und dem ortsfesten Gehäuse (2, 3), ein axialer Spalt (5) und zwischen dem u-förmigen Spaltring (7) und dem Ringraum (4) ein radialer Spalt gebildet wird,
**dadurch gekennzeichnet, dass**
die Passung des axialen Drosselspaltes (5) derart einstellbar ist, dass der mit dem Fördermedium gefüllte Ringraum (4) ausgeformt ist zwischen dem u-förmigen Spaltring (7) und der radial begrenzenden Fläche an dem ortsfesten Gehäuse (2, 3) wobei der Ringraum (4) so orientiert ist, dass er radial konzentrisch mit dem drehenden Bauteil (1) so ausgerichtet ist, dass eine radiale innere Begrenzung des Drosselspaltes (6) erzeugt wird.

2. Dichtungselement nach Anspruch 1 oder 2, **dadurch gekennzeichnet, dass** der Spaltring (7) aus mindestens einem metallischen Werkstoff ausgeführt ist.

3. Dichtungselement nach einem der Ansprüche 1 bis 3, **dadurch gekennzeichnet, dass** der Spaltring (7) als einteilig eingepresster oder mehrteiliger Bimetallspaltring ausgeführt ist, wobei die innere Lage (12) einen wesentlich kleineren thermischen Ausdehnungskoeffizienten aufweist als die äußere Lage (13).

4. Dichtungselement nach einem der oben genannten Ansprüche, **dadurch gekennzeichnet, dass** der Spaltring (7) als einteilig eingepresstes oder mehrteiliges Blechprofil ausgeführt ist.

5. Dichtungselement nach einem der oben genannten Ansprüche, **dadurch gekennzeichnet, dass** bei dem Spaltring (7) ein Langloch vorgesehen ist, das in Wirkverbindung zu einem Stift (10) steht, der mit dem Gehäuse (2) verbunden ist.

## Claims

1. Sealing element (7) having a u-shaped split ring (7) for sealing a rotating component (1) in relation to a fixed-location casing (2), wherein there is a hydrodynamic throttle gap (6) between the rotating component (1) and the casing (2), said throttle gap belonging to a flow machine for liquid delivery media and having the u-shaped split ring (7) provided in it, wherein an enclosed annular space (4) filled with the liquid delivery medium is formed by the u-shaped split ring (7) on a surface which belongs to the fixed-location casing (2, 3) and delimits the throttle gap (6) of the flow machine radially, wherein the annular space (4) is oriented such that it is concentrically aligned radially with the rotating component (1), wherein the annular space (4) is enclosed by means of the u-shaped split ring (7), wherein an axial gap (5) is formed between the u-shaped split ring (7) and the fixed-location casing (2, 3) and a radial gap is formed between the u-shaped split ring (7) and the annular space (4), **characterized in that**
the fit of the axial throttle gap (5) is adjustable such that the annular space (4) filled with the delivery medium is formed between the u-shaped split ring (7) and the radially delimiting surface on the fixed-location casing (2, 3), wherein the annular space (4) is oriented such that it is aligned radially concentrically with the rotating component (1) so as to produce a radial inner delimitation of the throttle gap (6).

2. Sealing element according to Claim 1 or 2, **characterized in that** the split ring (7) is made from at least one metallic material.

3. Sealing element according to one of Claims 1 to 3, **characterized in that** the split ring (7) is designed in the form of a bimetal split ring which is pressed in as a single piece or comprises more than one piece, wherein the inner layer (12) has a considerably smaller coefficient of thermal expansion than the outer layer (13).

4. Sealing element according to one of the aforementioned claims, **characterized in that** the split ring (7) is designed in the form of a sheet-metal profile which is pressed in as a single piece or comprises more than one piece.

5. Sealing element according to one of the aforementioned claims, **characterized in that** the split ring (7) has a slot, which is operatively connected to a pin (10), which is connected to the casing (2).

## Revendications

1. Élément d'étanchéité (7) comprenant une bague à fente (7) en forme de U destinée à réaliser l'étanchéité d'un élément structural (1) en rotation par rapport à un boîtier (2) fixe, une fente d'étranglement (6) hydrodynamique d'une turbomachine pour un fluide refoulé liquide se formant entre l'élément structural (1) en rotation et le boîtier (2), dans laquelle se trouve la bague à fente (7) en forme de U, un espace annulaire (4) confiné, rempli du fluide refoulé liquide, étant formé par la bague à fente (7) en forme de U au niveau d'une surface qui délimite radialement la fente d'étranglement (6) hydrodynamique de la turbomachine sur le boîtier (2, 3) fixe, l'espace annulaire (4) étant configuré de telle sorte qu'il est aligné concentriquement dans le sens radial avec l'élément structural (1) en rotation, l'espace annulaire (4) étant confiné au moyen de la bague à fente (7) configurée en forme de U, une fente axiale (5) étant formée entre la bague à fente (7) en forme de U et le boîtier (2, 3) fixe et une fente radiale étant formée entre la bague à fente (7) en forme de U et l'espace annulaire (4),
**caractérisé en ce que**
l'ajustement de la fente d'étranglement (5) axiale peut être réglé de telle sorte que l'espace annulaire (4) rempli du fluide refoulé liquide est façonné entre la bague à fente (7) en forme de U et la surface de délimitation radiale au niveau du boîtier (2, 3) fixe, l'espace annulaire (4) étant orienté de telle sorte qu'il est aligné concentriquement dans le sens radial avec l'élément structural (1) en rotation de manière à produire une délimitation intérieure radiale de la fente d'étranglement (6).

2. Élément d'étanchéité selon la revendication 1 ou 2, **caractérisé en ce que** la bague à fente (7) est réalisée à partir d'au moins un matériau métallique.

3. Élément d'étanchéité selon l'une des revendications 1 à 3, **caractérisé en ce que** la bague à fente (7) est réalisée sous la forme d'une bague à fente bimétallique d'une seule pièce pressée ou en plusieurs parties, la couche intérieure (12) possédant un coefficient de dilatation thermique sensiblement inférieur à la couche extérieure (13).

4. Élément d'étanchéité selon l'une des revendications précédentes, **caractérisé en ce que** la bague à fente (7) est réalisée sous la forme d'un profilé en tôle d'une seule pièce pressée ou en plusieurs parties.

5. Élément d'étanchéité selon l'une des revendications précédentes, **caractérisé en ce qu'**un trou oblong est présent au niveau de la bague à fente (7), lequel se trouve en liaison fonctionnelle avec une broche (10) qui est reliée au boîtier (2).
